(19) Europäisches Patentamt
European Patent Office
Office européen des brevets

(11) **EP 4 744 840 A1**

(12) **EUROPEAN PATENT APPLICATION**

(43) Date of publication:
20.05.2026 Bulletin 2026/21

(21) Application number: 24383237.5

(22) Date of filing: 13.11.2024

(51) International Patent Classification (IPC):
**B25J 9/16** (2006.01)    **H04J 3/06** (2006.01)

(52) Cooperative Patent Classification (CPC):
**B25J 9/1694; H04J 3/0667;** B25J 9/1697;
G05B 2219/37532

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **FINNESTAD, Yngve**
**4316 Sandnes (NO)**
• **CAMPO, Fernando**
**08032 Barcelona (ES)**
• **DIESTE, Carlos**
**22001 Huesca (ES)**
• **RODRIGUEZ, Jorge**
**08192 Sant Quirze del Valles (ES)**

(74) Representative: **Kransell & Wennborg KB**
**P.O. Box 27834**
**115 93 Stockholm (SE)**

(54) **ARRANGEMENT AND METHOD FOR SYNCHRONIZING A ROBOT CONTROLLER WITH AN EXTERNAL SENSOR**

(57)    A method of operating a robot controller (120) and a sensor (130), the method comprising:
initializing a controller clock (123) in a controller operating system (122) of the robot controller;
initializing a sensor clock (133) in a sensor operating system (132) of the sensor;
performing a bidirectional clock synchronization procedure using a bidirectional data connection (161) between the robot controller and the sensor;
after completion of the clock synchronization procedure and while controlling a robot manipulator (110) using the robot controller, recording operational data (OD) of the industrial robot using the robot controller and recording measurement data (MD) using the sensor;
timestamping the operational data on the basis of the controller clock;
timestamping the measurement data on the basis of the sensor clock; and
making the timestamped operational data and the timestamped measurement data available to an evaluation component (140).

Fig. 1

## Description

## TECHNICAL FIELD

Within the field of robotic control, the present disclosure addresses the problem of synchronizing a robot controller with an external sensor, for thereby enabling joint evaluation of data from the sensor and the robot controller. More precisely, there will be disclosed an arrangement of a robot controller, a sensor and an evaluation component, in which a bidirectional clock synchronization procedure is performed by respective operating systems in the robot controller and the sensor. There will further be disclosed a method for such synchronization.

## BACKGROUND

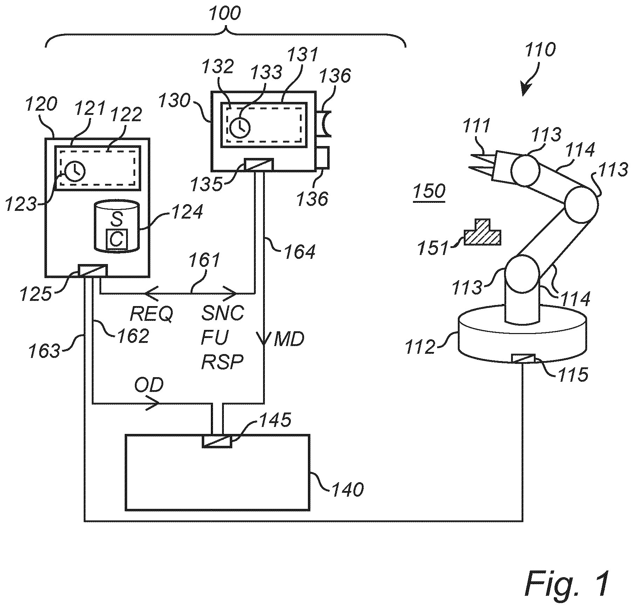

Industrial robots which are monitored or supported by external sensors will be considered in the present disclosure. With reference to figure 1, attention will be directed to technical arrangements 100 which comprise:

- a robot controller 120 configured to control a robot manipulator 110 of the industrial robot and to provide timestamped operational data OD of the industrial robot on the basis of a controller clock 123, which executes in a controller operating system 122;

- a sensor 130 arranged to perform measurements related to the industrial robot and configured to provide timestamped measurement data MD on the basis of a sensor clock 133, which executes independently of the robot clock in a sensor operating system 132; and

- an evaluation component 140 configured to associate the operational data with the measurement data in accordance with the timestamping.

For example, the sensor 130 may be an image sensor (e.g., camera, depth camera, video camera) or another type of contactless sensor (e.g., lidar, radar). The evaluation may be a computer-vision application executing in the robot controller 120 (i.e., the evaluation component 140 is integrated in the robot controller 120) or another processor (i.e., the evaluation component 140 is separate from the robot controller 120 and the sensor 130). In arrangements 100 according to this general architecture, a careful synchronization of the robot controller 120 and the sensor 130 will greatly benefit the evaluation of the operational and measurement data. In the mentioned computer-vision application, this allows a captured image to be accurately matched with a contemporaneous position or pose of the robot manipulator 110.

A known synchronization technique is to execute software in the robot controller 120 with an instruction of emitting an electric or optical sync signal at a predetermined point in time, and to measure the time of capturing the sync signal at the sensor 130. Although in principle the time of emitting the sync signal is equal to the time of capturing it at the sensor 130 (e.g., a light pulse is emitted towards the field of view of a camera), a significant variation in the delay from processing the instruction in CPU until it has been executed has been observed in practical sensor-robot arrangements. The delay may vary due to such factors as the current processing load on the robot controller 120, the execution status of the software, the level of thermal noise in the processing circuitry, the degree of congestion on an internal bus of the robot controller 120, jitter in a communication network that connects the robot controller 120 to the sync signal source, etc. The variations may be particularly pronounced when a wireless network or network segment is involved. Consequently, there is a nondeterministic delay until the electric or optical sync signal reaches the sensor (e.g., the light pulse is recorded by the camera), such that the sensor may incorrectly adopt the programmed time of the sync signal although it was in fact emitted after a nonzero delay. This may stop a truly accurate synchronization.

It would be desirable to enable more accurate synchronization of the robot controller 120 and the sensor 130.

## SUMMARY

One objective of the present disclosure is to make available methods and devices for synchronizing a robot controller and an external sensor more accurately. A further objective is to eliminate or decrease the impact of nondeterministic delays similar to those which are typically present in the previously known sensor-robot arrangements, where the synchronization functionality is based on electric or optical sync signals traveling towards the sensor. A further objective is to simplify the sensor-robot arrangement.

At least some of these objectives are achieved by the invention as defined by the independent claims. The dependent claims relate to advantageous embodiments of the invention.

An arrangement of a robot controller, a sensor and an evaluation device component with the features outlined in the preceding section is considered. According to a first aspect of the present disclosure, the arrangement further comprises a bidirectional data connection between the robot controller and the sensor, and the controller operating system and the sensor operating system are operable to perform a bidirectional clock synchronization procedure using the data connection.

It is appreciated that the intended clock synchronization procedure shall be "bidirectional" in the sense that it uses bidirectional communication between the controller operating system and the sensor operating system. In bidirectional communication, at least one message is transmitted in either direction during a cycle of the clock synchronization procedure. This makes it possible to compensate for any delay from processing a software instruction in CPU until it has been executed, as will be explained in detail. In particular, it is possible to compensate for any nondeterministic delays on the side of the robot controller, which the above-described known synchronization technique suffers from.

A further advantage with this first aspect is that the arrangement is structurally simpler. In particular, to the extent efforts have been spent on monitoring or reducing the nondeterministic delay from processing a sync instruction in CPU and executing this instruction at a signal source, these efforts can be spared as the delay will anyhow be compensated when the bidirectional clock synchronization procedure is carried out.

In a second aspect of the present disclosure, the inventors propose a robot controller configured to: control a robot manipulator of an industrial robot; provide timestamped operational data of the industrial robot on the basis of a controller clock, which executes in a controller operating system; and make the timestamped operational data available to an evaluation component. According to the second aspect, the robot controller has a bidirectional data connection to a sensor, which is arranged to perform measurements related to the industrial robot and comprises a sensor clock, which is independent of the controller clock. Further, the robot controller is operable to perform a bidirectional clock synchronization procedure using the data connection.

In a third aspect of the disclosure, the inventors propose a sensor arranged to perform measurements related to an industrial robot, the sensor configured to: provide timestamped measurement data on the basis of a sensor clock, which executes in a sensor operating system; and make the timestamped measurement data available to an evaluation component. According to the third aspect, the sensor has a bidirectional data connection to a robot controller of the industrial robot, wherein the robot controller comprises a controller clock, which is independent of the sensor clock. Further, the sensor is operable to perform a bidirectional clock synchronization procedure using the data connection.

In a fourth aspect of the present disclosure, the inventors propose a method of operating a robot controller of an industrial robot and a sensor. The method comprises: initializing a controller clock in a controller operating system of the robot controller; initializing a sensor clock in a sensor operating system of the sensor; performing a bidirectional clock synchronization procedure using a bidirectional data connection between the robot controller and the sensor; after completion of the clock synchronization procedure and while a robot manipulator of the industrial robot is controlled using the robot controller, recording operational data of the industrial robot using the robot controller and recording measurement data using the sensor; timestamping the operational data on the basis of the controller clock; timestamping the measurement data on the basis of the sensor clock; and making the timestamped operational data and the timestamped measurement data available to an evaluation component.

The second, third and fourth aspects of the disclosure generally share the effects and advantages of the first aspect, and they can be implemented with a corresponding degree of technical variation.

In some embodiments, the controller clock is a primary time source and the sensor clock is a secondary time source in the clock synchronization procedure.

The disclosure further relates to a computer program containing instructions for causing a computer to carry out the method of the fourth aspect. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

In the terminology of this disclosure, no technical distinction is intended between the acts of "synchronizing device A with device B" and "synchronizing device A and device B". These expressions are used interchangeably herein.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless this is explicitly stated.

## BRIEF DESCRIPTION OF THE DRAWINGS

Aspects and embodiments are now described, by way of example, with reference to the accompanying drawings, on which:

figure 1 shows an industrial robot composed of a robot manipulator and a robot controller, the robot controller and an external sensor deliver timestamped data to an evaluation component;

figure 2 is a sequence diagram of an example bidirectional clock synchronization procedure;

figure 3 shows a mobile robot with a robot-mounted external sensor;

figure 4 shows an embodiment where the evaluation component is integrated in the robot controller; and

figure 5 is a flowchart of a method operating a robot controller and a sensor.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

Figure 1 shows an industrial robot composed of a robot manipulator 110 and a robot controller 120. Through respective communication interfaces 115, 125, the robot manipulator 110 and the robot controller 120 are joined by a wired or wireless bidirectional data connection 163, which conveys control signals, sensor data etc.

The robot manipulator 110 includes an arm, which extends from a base 112 and is composed of structural elements 114 and at least one linear or rotary joint 113. The arm may further include an end-effector 111 allowing it to carry tools by which it may interact with objects in the form of various workpieces 151, which are present in a work area 150 of the robot manipulator 110. The workpieces are subject to manufacture, processing or handling by the robot manipulator 110. The work area 150 may further include non-workpiece objects, such as containers, fixtures, robot positioners, separators, insulators, supports etc. The non-workpiece objects could also be consumables or containers for consumables.

The arm of the robot manipulator 110 is movable by action of internal motors, drives or other sorts of actuators (not shown). The arm of the robot manipulator 110 further includes transducers, encoders, sensors and other measuring equipment (not shown), from which the manipulator's 110 current position, pose, technical condition, load etc. can be derived, to some degree of accuracy. The position, pose etc. of the robot manipulator 110 may in particular refer to a point on the arm, particularly to a tool-center point (TCP).

The actuators of the robot manipulator 110 can be controlled based on feedback from the measuring equipment. In particular, the different degrees of freedom (DOFs) of the robot manipulator 110 can be controlled in accordance with force control (also known as impedance control, stiffness control) or position control. In broad terms, position control signifies that the actuators are controlled in such manner that the robot manipulator 110 achieves a desired setpoint position (optionally subject to constraints on speed or acceleration), whereas force control may be said to establish a connection between the contact force and the position when the robot manipulator 110 makes contact with an object. The robot can conceptually 'feel' its surroundings. It is able to apply a constant force on a surface, even if the exact position of the surface is not known. Hybrid control may signify that some DOFs of the robot are position-controlled and others are force-controlled.

The robot controller 120 comprises processing circuitry 121, a memory 124 and the mentioned communication interface 125. Example content of the memory 122 during operation may include

S: operating system software, basic settings, software implementing generic movements, sensing, self-monitoring, generically useful functionalities and services (all typically contributed by an original manufacturer), task- or role-specific configurations, configuration templates (typically contributed by a robot system integrator), and site-specific settings (typically contributed by an end user);

C: robot programs or projects causing the robot manipulator 110 to perform useful or intended tasks in its work area 150.

Processes that execute the robot programs may do so in accordance with the program-independent memory content S, e.g., by making calls to available functionalities, libraries, routines or parameter values therein. It is recalled that the memory 124 and processing circuitry 121 of the robot controller 120 may be distributed and/or contain networked resources having a different physical localization than figure 1 suggests. Each of the programs C may contain a plurality of movement instructions relating to locations such as points, poses, paths as well as modulated paths. A program may be a compiled executable (binary) or a script. A movement instruction relating to a modulated path may be expressed as, or may include, a process-on-path instruction. The programs C may be created by an operator with the aid of a robot programming device (programming station) or a general-purpose computer, or they may be created directly at the robot controller 120 through an operator interface.

The processing circuitry 121 is operable to run the operating system (controller operating system) 122, which provides an execution environment for the robot programs C. The operating system 122 acts as an intermediary through which an executing robot program can access the hardware resources of the robot controller 120 and/or networked resources in communication with the robot controller 120. The operating system 122 makes common services available to the robot programs C, including a system clock (controller clock) 123. The operating system 122 may be configured to evolve the system clock by counting oscillations of a crystal oscillator associated with the processing circuitry 121.

From a functional perspective, the robot controller 120 is part of an arrangement 100 which further includes a sensor 130 and an evaluation component 140. The sensor 130 is arranged to perform measurements related to the industrial robot. In the example of figure 1, the sensor 130 is illustrated as a device with two optical instruments 136 directed at the work area 150 where the robot manipulator 110 operates. According to further examples, the sensor 130 may include another type of contactless sensor (e.g., lidar, radar) or a contact sensor (e.g., strain gauge, inertial sensor, thermometer).

The device constituting the sensor 130 comprises, in addition to the optical instruments 136, processing circuitry 131, memory (not shown) and a communication interface 135. The processing circuitry 131 is operable to run an operating system (sensor operating system) 132, which includes a further system clock (sensor clock) 133. The sensor operating system 132 executes independently of the controller operating system 122. The independence of the two operating systems may concretely signify one or more of the following: the controller operating system 122 and the sensor operating system 132 execute on disjoint hardware resources; the controller operating system 122 and the sensor operating system 132 evolve their respective system clocks based on two distinct crystal oscillators; the execution of the controller operating system 122 can continue during downtime of the sensor operating system 132, and vice versa; there is no inherent synchronization mechanism linking the controller operating system 122 and the sensor operating system 132; there is usually limited or no failure propagation from the controller operating system 122 to the sensor operating system 132, and vice versa. The independence of the operating systems is desirable for several reasons, but it also causes the controller clock 123 and the sensor clock 133 to be in an asynchronous relationship; it allows the controller clock 123 and the sensor clock 133 to drift apart.

The evaluation component 140 may be implemented as a personal computer, a handheld processing device, a network drive (e.g., host computer, server, cloud resource) or a virtual machine supported by suitable processing resources. On the hardware level, the evaluation component 140 includes processing circuitry, memory, a communication interface 145 and optional further subcomponents such as an operator interface. A main function of the evaluation component 140 is to evaluate data received from the robot controller 120 and the sensor 130. At the communication interface 145, the evaluation component 140 receives operational data OD from the robot controller 120 on a first data connection 162, and it receives measurement data MD from the sensor 130 on a second data connection 164. The operational data may include one or more of the following:

- a recorded trajectory of the robot manipulator 110,

- recorded positions and/or poses of the robot manipulator 110,

- internal machine or status parameters, such as temperature, fluid pressure, measured load, battery level.

A trajectory in the intended sense may indicate the robot manipulator's 110 position and/or pose as a function of time, wherein the position or pose may be expressed in cartesian or joint-space coordinates. The position or pose need not be indicated for all points in time. Alternatively, the trajectory may be expressed as a number of reference times at which the robot manipulator is to assume corresponding setpoint positions or setpoint poses, wherein the robot manipulator's 110 positions or poses in the intervals between the reference times are not documented.

The robot controller 120 is configured to timestamp the operational data OD on the basis of the controller clock 123, and similarly, the sensor 130 is configured to timestamp the measurement data MD on the basis of the sensor clock 133. Timestamping in this sense may include associating items of operational/measurement data with a clock-time value at the time of establishment, or to format the operational/measurement data in accordance with a data format (e.g., time slots with a predefined duration, data frames) from which a recipient can derive corresponding times of establishment of respective data items. Although, as mentioned, the controller operating system 122 and the sensor operating system 132 - and hence the controller clock 123 and the sensor clock 133 - run independently from each other, the timestamps are preferably expressed in a common date-and-time representation, such as Unix time, terrestrial time, Coordinated Universal Time (UTC) or the like. Alternatively, the two sets of timestamps are preferably expressed in two date-and-time representation which can be unambiguously converted into each other. This allows the operational data to be associated with the measurement data in accordance with the timestamping. The thus associated items of operational data and measurement data will nominally have been established with exact synchronicity, although in practice they will be spread apart by the same amount as the current clock drift between the controller clock 123 and the sensor clock 133.

The evaluation component 140 may for example be configured to run a computer-vision application, where an image captured by the optical instrument 136 of the sensor 130 is matched with a (nominally) contemporaneous position or pose of the robot manipulator 110 in each cycle. Alternatively, the evaluation component 140 may be a process-documentation application, which collects and retains data describing a manufacturing, processing or handling process in which the industrial robot was active; such documentation may be relevant for quality assurance purposes or for logistic tracking.

In further examples, the evaluation component 140 may be configured for three-dimensional (3D) scanning of large objects, line scanning to create high-resolution images of complex surface, laser welding and pick-and-place applications. In 3D scanning, a point-cloud model of the large object is built by patching together depth images captured by the sensor 130 (a scanner) while the robot manipulator 110 holds the scanner in different viewing positions, wherein the viewing positions correspond to manipulator positions and can be derived from operational data OD. In line scanning, it is desirable for similar reasons to accurately associate a scanned surface portion with the contemporaneous scanner position.

The described setup and the example use cases of the evaluation component 140 may illustrate the importance of having sufficient synchronization between the timestamps of the operational data and measurement data. For this purpose, the arrangement 100 further comprises a bidirectional data connection 161 between the robot controller 120 and the device constituting the sensor 130. The bidirectional data connection 161 may be wired or wireless. Preferably, the bidirectional data connection 161 is a one-hop data connection in the sense that it is not relayed by any intervening component; it does not require support by a base station, access point or other network infrastructure, as in the case of a cellular connection or a connection between two stations compliant with IEEE 802.11 (Wi-Fi™). In particular, the bidirectional data connection 161 may be a one-hop digital data connection.

The bidirectional data connection 161 is used for performing a bidirectional clock synchronization procedure. According to the present example, the controller clock 123 acts as primary time source (master clock time) and the sensor clock 133 acts as secondary time source (slave clock time) in bidirectional clock synchronization procedure. This is to say, the clock time of the controller clock 123 is applied to the sensor clock 133. The clock time of the sensor clock 133 is not applied to any device except possibly the sensor 130 itself; this is to say, the sensor clock 133 may be left unchanged if, during the clock synchronization procedure, it is found that its clock time agrees with the time of the controller clock 123. Preferably, the bidirectional clock synchronization procedure includes synchronizing the sensor clock 133 with the controller clock 123, wherein the controller clock 123 is used as unique primary time source. In other words, the bidirectional clock synchronization procedure does not rely on any further primary time source, such as a network clock.

In some embodiments, the controller operating system 122 and the sensor operating system 132 are configured to communicate using the data connection 161 as respective endpoints of a common clock synchronization protocol, which specifies said bidirectional clock synchronization procedure. The clock synchronization protocol may be a so-called precision time protocol (PTP), in particular a protocol compliant with an IEEE 1588 specification, such as IEEE 1588-2019, "IEEE Standard for a Precision Clock Synchronization Protocol for Networked Measurement and Control Systems" (ISBN 978-1-5044-6341-6, DOI 10.1109/IEEESTD.2020.9120376), and the earlier version IEEE 1588-2008.

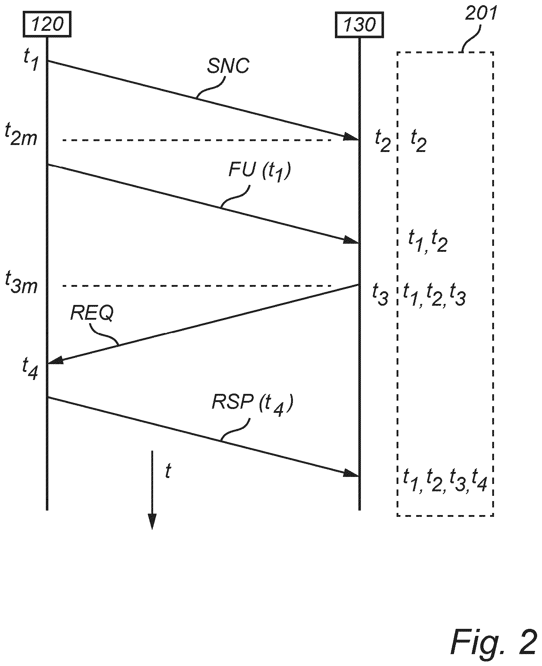

Figure 2 is a sequence diagram of an example bidirectional clock synchronization procedure, which the controller operating system 122 in the robot controller 120 and the sensor operating system 132 in the sensor 130 carry out. The robot controller 120 corresponds to the left-hand vertical bar, the sensor 130 corresponds to the right-hand vertical bar, and the positive time direction is downward. The messages exchanged over the bidirectional data link 161 during the bidirectional clock synchronization procedure are indicated by solid arrows. For orientation, the same messages are also indicated in figure 1, and using identical labels. The times $t_1$, $t_2$, $t_3$, $t_4$ indicated next to each vertical bar are local times. Further, as indicated by the horizontal dashed lines, $t_{2m}$ denotes the controller-clock time synchronous to the sensor-clock time $t_2$, the time at which the sensor 130 receives the SNC message, and $t_{3m}$ denotes the controller-clock time synchronous to the sensor-clock time $t_3$, the time at which the sensor 130 transmits the message REQ. In figure 2, the dashed box 201 to the right of the sequence diagram indicates at each time the information which is available in the sensor 130.

The robot controller 120 transmits a sync message SNC to the sensor 130 and registers the transmit time $t_1$. The sensor 130 receives the SNC message and records the receive time $t_2$. The sensor 130 further receives a follow-up message, denoted $FU(t_1)$, which carries the transmit time $t_1$. The sensor 130 transmits a delay request message REQ to the robot controller 120 and registers the corresponding transmit time $t_3$. The robot controller 120 receives the message REQ from the sensor 130 and records the receive time $t_4$. Finally, the robot controller 120 transmits a delay response message, denoted $RSP(t_4)$, which carries the recorded receive time $t_4$. At this point in time, the sensor 130 has at its disposal all four recorded transmit and receive times $t_1$, $t_2$, $t_3$, $t_4$, and the sensor 130 is thus able to compute an offset (or drift) $\tilde{o}$ of the sensor clock 133 relative to the controller clock 123, and the propagation time d between the two clocks. Assuming that the propagation time in the uplink (towards the robot controller 120) is equal to the propagation time in the downlink (towards the sensor 130), and further that the offset $\tilde{o}$ is stable for the duration of the clock synchronization procedure, one has:

$$\begin{cases} t_2 - t_1 = \tilde{o} + d \\ t_4 - t_3 = -\tilde{o} + d \end{cases}$$

Solving for the offset yields:

$$\tilde{o} = \frac{t_2 - t_1 - t_4 + t_3}{2}$$

The negative offset $-\tilde{o}$ is applied to the sensor clock 133 as a correction, which brings the offset down to substantially zero.

It is appreciated that the sync message SNC from the robot controller 120 acts as an initiation message indicating a start of the bidirectional clock synchronization procedure. In some implementations, the sensor 130 may have the option of requesting the robot controller 120 to send the sync message SNC, so that the clock synchronization procedure may be executed at the initiative of the sensor 130. The delay request message REQ is send after the sensor operating system 132 has received the synch message SNC from the controller operating system 122.

It is noted that, according to the bidirectional clock synchronization procedure illustrated in figure 2, a single controller clock 123 can act as primary time source vis-à-vis multiple sensor clocks 133-1, 133-2, 133-3, ... in parallel. Then, the messages $SNC$ and $FU(t_1)$, which are identical in content across all sensors 130-1, 130-2, 130-3, .... are broadcast to all of these. The RSP message, for its part, is extended to carry as many different receive times $t_4^{(1)}, t_4^{(2)}, t_4^{(3)}, ...$ as there are sensor clocks, $RSP\left(\left\{t_4^{(1)}, t_4^{(2)}, t_4^{(3)}, ...\right\}\right)$. Alternatively, multiple individualized RSP messages can be unicast to the relevant sensors 130-n, with the corresponding recorded receive times, $RSP\left(t_4^{(n)}\right), n = 1,2, ....$

While figure 2 illustrates a possible way of implementing the teachings herein, the exact characteristics of the clock synchronization procedure are not essential features of the invention. For example, if the robot controller 120 is capable of determining a sufficiently accurate transmit time of a message already at the time of transmitting the message, an alternative clock synchronization procedure may include just the messages $FU(t_1)$, $REQ$ and $RSP(t_4)$, with $t_1$ referring now to the transmit time of $FU(t_1)$ itself. However, it should be clear from these examples that a unidirectionally emitted electric or optical sync signal, like the one used in the known synchronization technique described initially, cannot support a bidirectional clock synchronization procedure.

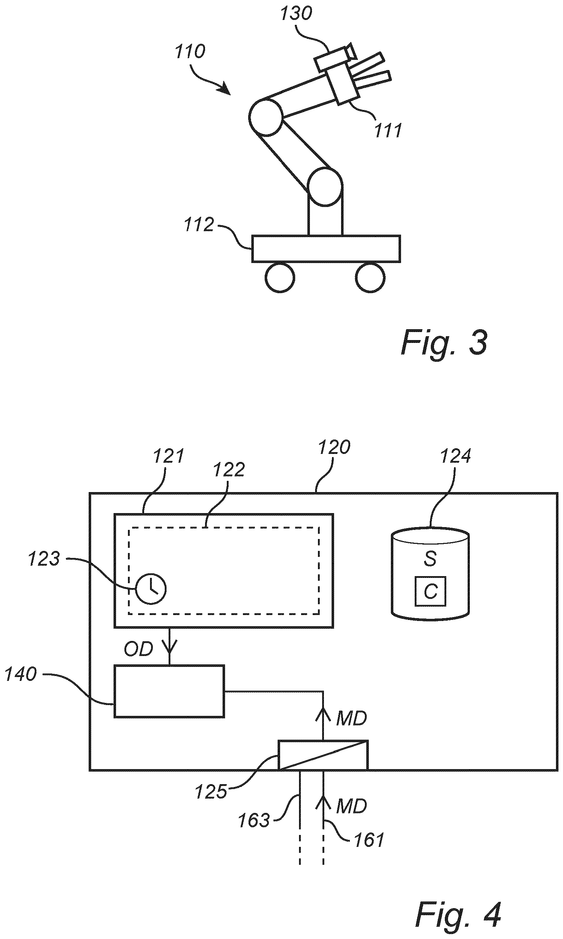

The evaluation component 140 may be separate from the robot controller 120 and the sensor 130, as shown in figure 1. Alternatively, as shown in figure 4, it may be integrated into the robot controller 120.

Figure 3 shows a mobile robot to which the teachings disclosed herein can be applied. Here the robot manipulator's 110 robot base 112 is provided with wheels, bands or other means for moving on a floor, on ground, on rails or another substrate. It is provided with an external sensor 130 mounted on or in the vicinity of the end effector 111. To allow the mobile robot of figure 3 to move as intended, the above-discussed data connections 161, 164 to and from the sensor 130 are necessarily wireless. Apart from being restricted to wireless communication, the robot-carried sensor 130 can be included in an arrangement 100 with the structure and function as described above.

Figure 4 shows an embodiment where the evaluation component 140 is integrated in the robot controller 120. The timestamped operating data OD is transmitted internally in the robot controller 120, which is functionally equivalent to the data connection 162 in figure 1. A further difference is that the data connection 161 between the robot controller 120 and the sensor 130 is used not only for carrying out the bidirectional clock synchronization but also for forwarding timestamped measurement data MD to the robot controller 120 (cf. data connection 164 in figure 1). It is understood that the data connection 163 continues to a robot manipulator (not shown).

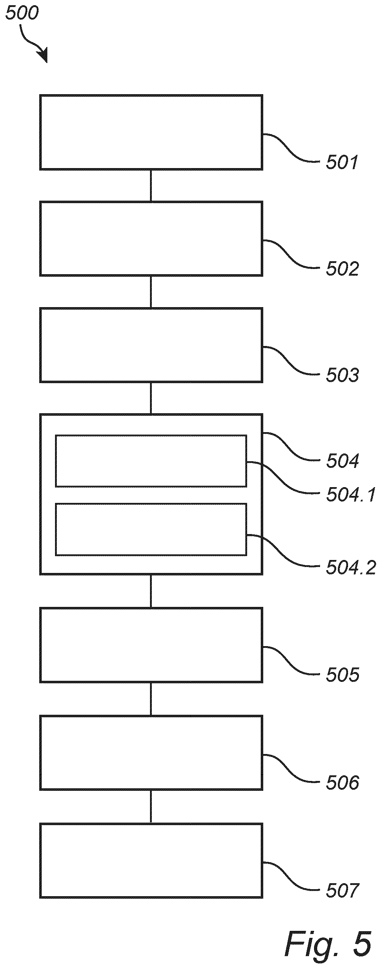

Figure 5 is a flowchart of a method 500 of operating a robot controller 120 and a sensor 130. The method 500 can be performed by a generic robot controller 120 and a generic sensor 130 provided that each of these devices has an independent operating system with a clock service and that the devices are joined by a bidirectional data connection 161. Example implementations of such a robot controller 120 and sensor 130 are described in detail above with reference to figures 1-4. In a final step 507 of the method 500, the robot controller 120 and the sensor 130 make data available to an evaluation component 140; this requires no active participation from the side of the evaluation component 140.

In a first step 501 of the method 500, a controller clock 123 in a controller operating system 122 of the robot controller is initialized. Initializing the controller clock 123 includes assigning a current clock time, which the controller clock 123 is to evolve independently, e.g., based on a local crystal oscillator.

In a second step 502, a sensor clock 133 in a sensor operating system 132 of the sensor is initialized, e.g., in a manner resembling the initialization of the controller clock 123. After the controller clock 123 and the sensor clock 133 are running, an unwanted offset (drift) may develop due to the independence of the respective operating systems 122, 132, and/or due to hardware imperfections or environmental factors.

In a third step 503, a bidirectional clock synchronization procedure is performed using the bidirectional data connection 161 between the robot controller 120 and the sensor 130. In this third step 503, according to the example described, the controller clock 123 is a primary time source and the sensor clock 133 is a secondary time source in the clock synchronization procedure; an expected end result of such synchronization may be that the controller clock's 123 clock time is assigned to the sensor clock 133. In one implementation, the bidirectional clock synchronization procedure may include transmitting the messages SNC, FU, REQ and RSP described above with reference to figure 2.

In a fourth step 504, the robot controller 120 controls a robot manipulator 110 of the industrial robot. (The steps of the method 500 are not necessarily disjoint in time, but the controlling can optionally have begun earlier than steps 501, 502 and 503.) In this condition, if operational data OD of the industrial robot is recorded using the robot controller 120 (substep 504.1) and measurement data MD is recorded using the sensor 130 (substep 504.2) after completion of step 503, then, thanks to the bidirectional clock synchronization procedure, the operational and measurement data can be accurately aligned in time.

In subsequent steps 505-506 (which may be performed as an integral part of the recording of the operational data and the measurement data), the operational data is timestamped on the basis of the controller clock 123 and the measurement data is timestamped on the basis of the sensor clock 133. As explained above, timestamping may include associating items of operational/measurement data with a clock-time value representing the time of establishment. The time of establishment may correspond to the time of recording a data item, or the time of reading it from a runtime memory of the robot controller 120 or the time of reading it from a measuring instrument in the sensor 130.

In a next step 507, then, the timestamped operational data OD and the timestamped measurement data MD are made available to an evaluation component 140. The timestamped operational data OD and the timestamped measurement data MD can become available by being transferred to the evaluation component 140 over an internal or external data link, as in the examples of figures 1 and 4. Alternatively, the timestamped operational data OD and the timestamped measurement data MD can become available by being stored in a shared memory, which the operational component is authorized to read data from.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. In such other embodiments, for example, the sensor clock may be a primary time source and the controller clock may be a secondary time source in the clock synchronization procedure.

**Claims**

1. An arrangement (100) comprising:

   a robot controller (120) configured to control a robot manipulator (110) of an industrial robot and to provide timestamped operational data

(OD) of the industrial robot on the basis of a controller clock (123), which executes in a controller operating system (122);
   a sensor (130) arranged to perform measurements related to the industrial robot and configured to provide timestamped measurement data (MD) on the basis of a sensor clock (133), which executes independently of the robot clock in a sensor operating system (132); and
   an evaluation component (140) configured to associate the operational data with the measurement data in accordance with the timestamping,
   **characterized by** a bidirectional data connection (161) between the robot controller and the sensor,
   wherein the controller operating system and the sensor operating system are operable to perform a bidirectional clock synchronization procedure using the data connection.

2. The arrangement (100) of claim 1, wherein the controller operating system (122) and the sensor operating system (132) are configured to communicate using the data connection (161) as respective endpoints of a common clock synchronization protocol, which specifies said bidirectional clock synchronization procedure.

3. The arrangement (100) of claim 2, wherein the clock synchronization protocol is a precision time protocol, in particular a protocol compliant with an IEEE 1588 specification, such as IEEE 1588-2008 and IEEE 1588-2019.

4. The arrangement (100) of any of the preceding claims, wherein the bidirectional clock synchronization procedure includes synchronizing the sensor clock (133) with the controller clock (123) as unique primary time source.

5. The arrangement (100) of any of the preceding claims, wherein the robot controller (120) is configured to transmit an initiation message (SNC) indicating a start of the bidirectional clock synchronization procedure.

6. The arrangement (100) of any of the preceding claims, wherein a cycle of the bidirectional clock synchronization procedure includes a delay request message (REQ) sent from the sensor operating system (132) after it receives an initiation message (SNC) from the controller operating system (122).

7. The arrangement (100) of any of the preceding claims, wherein the sensor (130) is attached to the robot manipulator (110), in particular to an end-effector (111) of the robot manipulator.

8. The arrangement (100) of any of the preceding claims, wherein the bidirectional data connection (161) is a one-hop digital data connection.

9. The arrangement (100) of any of the preceding claims, wherein the operational data includes a recorded trajectory of the robot manipulator (110) and/or recorded positions of the robot manipulator.

10. The arrangement (100) of any of the preceding claims, wherein the sensor (130) is an image sensor.

11. The arrangement (100) of any of the preceding claims, wherein the evaluation component (140) is integrated in the robot controller (120), or wherein the evaluation component (140) is separate from the robot controller (120) and the sensor (130).

12. The arrangement (100) of any of the preceding claims, wherein the controller clock is a primary time source and the sensor clock is a secondary time source in bidirectional clock synchronization procedure.

13. A robot controller (120) configured to:

control a robot manipulator (110) of an industrial robot;
provide timestamped operational data of the industrial robot on the basis of a controller clock (123), which executes in a controller operating system (122); and
make the timestamped operational data available to an evaluation component (140),
**characterized in that**
the robot controller has a bidirectional data connection (161) to a sensor (130), which is arranged to perform measurements related to the industrial robot and comprises a sensor clock (133), which is independent of the controller clock, and
the robot controller is operable to perform a bidirectional clock synchronization procedure using the data connection.

14. A sensor (130) arranged to perform measurements related to an industrial robot, the sensor configured to:

provide timestamped measurement data on the basis of a sensor clock (133), which executes in a sensor operating system (132); and
make the timestamped measurement data available to an evaluation component (140),
**characterized in that**
the sensor has a bidirectional data connection (161) to a robot controller (120) of the industrial robot, wherein the robot controller comprises a controller clock (123), which is independent of the sensor clock, and
the sensor is operable to perform a bidirectional clock synchronization procedure using the data connection.

15. A method (500) of operating a robot controller (120) of an industrial robot and a sensor (130), the method comprising:

initializing (501) a controller clock (123) in a controller operating system (122) of the robot controller;
initializing (502) a sensor clock (133) in a sensor operating system (132) of the sensor;
performing (503) a bidirectional clock synchronization procedure using a bidirectional data connection (161) between the robot controller and the sensor;
after completion of the clock synchronization procedure and while a robot manipulator (110) of the industrial robot is controlled (504) using the robot controller,

- recording (504.1) operational data (OD) of the industrial robot using the robot controller, and
- recording (504.2) measurement data (MD) using the sensor;

timestamping (505) the operational data on the basis of the controller clock;
timestamping (506) the measurement data on the basis of the sensor clock; and
making (507) the timestamped operational data and the timestamped measurement data available to an evaluation component (140).

16. A computer program (C) comprising instructions which, when the program is executed by a computer, cause the computer to carry out the method (500) of claim 15.

Fig. 1

Fig. 2

*Fig. 3*

*Fig. 4*

Fig. 5

**EUROPEAN SEARCH REPORT**

Application Number

EP 24 38 3237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/133254 A1 (LIBERTY REACH INC [US]) 13 July 2023 (2023-07-13) * abstract * * paragraph [0025] - paragraph [0068] * * figures * * claims * ----- | 1-16 | INV. B25J9/16 H04J3/06 |
| A | KANG B LEE ET AL: "Proceeding of the 2005 conference on IEEE 1588 standard for a precision clock synchronization protocol for networked measurement and control systems NIST IR 7302", NIST, NATIONAL INSTITUTE OF STANDARDS AND TECHNOLOGY (NIST) , 31 December 2005 (2005-12-31), pages 1-535, XP061055340, DOI: 10.6028/NIST.IR.7302 Retrieved from the Internet: URL:https://nvlpubs.nist.gov/nistpubs/Legacy/IR/nistir7302.pdf [retrieved on 2005-12-31] * page 73 - page 110 * ----- | 1-16 | |
| A | GEORG GADERER ET AL: "Improving Fault Tolerance in High-Precision Clock Synchronization", IEEE TRANSACTIONS ON INDUSTRIAL INFORMATICS, IEEE SERVICE CENTER, NEW YORK, NY, US, vol. 6, no. 2, 1 May 2010 (2010-05-01), pages 206-215, XP011305546, ISSN: 1551-3203 * the whole document * ----- -/-- | 1-16 | TECHNICAL FIELDS SEARCHED (IPC)  B25J G05B H04L H04J |

The present search report has been drawn up for all claims

| Place of search | Date of completion of the search | Examiner |
|---|---|---|
| The Hague | 15 April 2025 | Abbing, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 38 3237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAHMOOD ANEEQ ET AL: "Clock Synchronization Over IEEE 802.11-A Survey of Methodologies and Protocols", IEEE TRANSACTIONS ON INDUSTRIAL INFORMATICS, IEEE SERVICE CENTER, NEW YORK, NY, US, vol. 13, no. 2, 1 April 2017 (2017-04-01), pages 907-922, XP011647206, ISSN: 1551-3203, DOI: 10.1109/TII.2016.2629669 [retrieved on 2017-04-19] * the whole document * ----- | 1,5,6, 13-16 | |

TECHNICAL FIELDS
SEARCHED (IPC)

The present search report has been drawn up for all claims

| Place of search | Date of completion of the search | Examiner |
|---|---|---|
| The Hague | 15 April 2025 | Abbing, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 38 3237

This annex lists the patent family members relating to the patent documents cited in  the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| WO 2023133254 A1 | 13-07-2023 | EP 4460806 A1 | 13-11-2024 |
| | | US 2023215049 A1 | 06-07-2023 |
| | | WO 2023133254 A1 | 13-07-2023 |

EPO FORM P0459

For more details about this annex : see Official Journal of the European Patent Office, No. 12/82

**REFERENCES CITED IN THE DESCRIPTION**

**Non-patent literature cited in the description**

- *IEEE Standard for a Precision Clock Synchronization Protocol for Networked Measurement and Control Systems*, ISBN 978-1-5044-6341-6